# EUROPEAN PATENT APPLICATION

(11) **EP 4 235 980 A1**
(43) Date of publication of application: **30.08.2023**
(21) Application number: 23153473.6
(22) Date of filing: 26.01.2023
(51) Int. Cl.: H01R 13/74, H01R 31/06

(54) **SINGLE PASS-THROUGH CONNECTOR**

(30) Priority: 24.02.2022 GB 202202582
(71) Applicant: Aptiv Technologies Limited, St. Michael (BB)
(72) Inventor: RICHTER-BROCKMANN, Tobias, 40233 Düsseldorf (DE); PUELLEN, Lukas, 42113 Wuppertal (DE); HERZOGENRATH, Pekka, 42115 Wuppertal (DE); STAUDT, Daniel, 44879 Bochum (DE)
(74) Representative: Novagraaf International SA

(57) **Abstract**

A single pass-through connector (100) for connecting first cables (1001c,) and second cables (2001c) disposed in respective first area (A1) and second area (A2) of a vehicle,
the single pass-through connector (100) having a frame body (300) and a plurality of first communication network connectors (101) for receiving portions of the first cables (1001c) and of the second cables (2001c),
each first communication network connector (101) has a back portion (101b) and a front portion (101f), and
wherein each first communication network connector (101) is arranged for receiving the corresponding first cable (1001c) from the back portion (101b), and for receiving the corresponding second cable (2001c) from the front portion (101f), so as to connect the corresponding first cable (1001c) and the corresponding second cable (2001c) together and pass-through a separation between the two areas (A1, A2).

## Description

### TECHNICAL FIELD

The present disclosure relates to the field of electrical connection of cables and the like, for all industries and in particular in the aeronautic or automotive industry.

### BACKGROUND

The electrical connection of cables is known with connectors at each end. Several types of connector exist, in particular for data transfer. An example of data transfer connector is an ethernet connector.

For example, in the automotive industry, there is a need for improved connections in particular when the number of cables to be connected increases together with the number of applications such as radar, camera, various monitoring and the like. That is, a crowded environment around the higher number of cables to be connected can be experienced and there is not enough space to connect other cables.

Further, there is a need to improve the connection of cables, in particular for prototypes, wherein there is a need for testing and removing the cables in a more convenient manner, including higher productivity.

### SUMMARY

In view of the above, the aim of the present disclosure is to reduce the time it takes to connect and disconnect cables, in particular for a prototype of car for which the good set of convenient cables is not known in advance and will be adapted several times during the life of the prototype. Further, there is a need to increase the number of cables in a compact environment while increasing the flexibility in term of cables (type, number, etc) to be connected. Still further, there is a need for a connector suitable for several cables being more compact than several connectors, each being for only one cable.

Thereby, the present disclosure concerns a single pass-through connector for connecting first cables and second cables disposed in respective first area and second area of a vehicle,
the single pass-through connector having a frame body arranged to be fixed on a separation between said areas,
the single pass-through connector further having a plurality of first communication network connectors for receiving portions of the first cables and of the second cables,
wherein the plurality of first communication network connectors is fixed on the frame body, and
each first communication network connector has a back portion on a first side of the frame body and a front portion on a second side of the frame body, and wherein each first communication network connector is arranged for receiving the corresponding first cable from the back portion, and for receiving the corresponding second cable from the front portion, so as to connect the corresponding first cable and the corresponding second cable together and pass-through the separation between the two areas.

This allows to reduce the time it takes to connect and disconnect cables, to better arrange the cables so as to be more compact and allow an increased number of cables to be connected, thereby allowing for more data to be transferred by the cables. That is, this allows for space saving, but also for hybridization and multi-standard on the same single pass-through (rack), to come up with possible spare connections while providing a stronger mechanical behavior of the single pass-through connector. Further, this allows to facilitate the cabling works, and the connection/disconnection works, in particular in the automotive industry using prototypes and wherein the number of cables is to be adapted on site (that is, directly on the car and not necessarily on a production line). Thereby the number of cables to be connected can be increased together with the number of applications such as radar, camera, various monitoring and the like. In addition, this allows for an interchangeable connector of different devices without changing the (entire) wire harness when multiple connections are merged in one connector.

Advantageously, the separation is a panel of the vehicle.

Advantageously, the second side is opposite to the first side.

Advantageously, the corresponding first cable and the corresponding second cable are aligned along a main axis of the first communication network connector, when connected together.

Advantageously, the first communication network connectors are fixed on the frame body with glue or by ultrasonic welding, or any suitable fixation means.

Advantageously, at least two of the first communication network connectors are identical.

This allows to provide identical connectors while authorizing hybridization with other types of connectors, such as other type of ethernet connectors.

Advantageously, at least one of the first communication network connectors is arranged to receive inside an automatable module ethernet connector.

Advantageously, at least one of the first communication network connectors is arranged to receive inside an AMEC connector, wherein AMEC means Automotive Modular Ethernet Connection.

This allows for an improved data transfer.

Advantageously, at least one of the first communication network connectors is a male insert.

Advantageously, at least one of the first communication network connectors is a female insert

Advantageously, the single pass-through connector presents a connector pitch distance between each of the first communication network connectors which is less than 30 mm, preferably less than 27 mm, more preferably less than 25 mm.

This allows to reduce the overall dimension and to allow for a higher number of cables to be connected, while keeping the previous advantages as explained herein.

Advantageously, the frame body comprises at least one hole arranged to receive fixation device, such as a screw, hexagon nut, or a pin.

Advantageously, the frame body comprises at least one fixation mean or fixation device.

Advantageously, each back portion has a back lock portion arranged to hold in position the corresponding first cable.

Advantageously, each back portion has a back lock portion arranged to hold in position the corresponding first cable and its tip-end.

This allows to improve the fixation of the first cables on the single pass-through connector.

Advantageously, each first communication network connector is arranged to fit a corresponding second communication network connectors of the second cables.

Advantageously, each first communication network connector is arranged to fit each corresponding second communication network connectors of the second cables.

This allows to strengthen the connection between the first cables and the second cables, so as to do not loose the connection of the inside connectors placed inside the first communication network connector and the second communication network connector.

Advantageously, each first communication network connector is arranged to receive inside :
- a tip-end of one of the first cables or of the second cables, and/or
- another tip-end of the other of the first cables or of the second cables.

Advantageously, the tip-end may be a male connection or a female connection.

Advantageously, the tip-end is a connection. That is to say, the tip-end is also called tip-connector.

Advantageously, the tip-ends may be neutral gender connectors.

Advantageously, the tip-ends may be either male connection, female connection, neutral gender connection or combination thereof.

Advantageously, each first communication network connector is arranged to receive inside :
- a male connection of one of the first cables or of the second cables, and/or
- a female connection of the other of the first cables or of the second cables.

Advantageously, each first communication network connector is arranged to receive inside :
- a tip-end of one of the first cables from the back portion, and
- a tip-end of one of second cables from the front portion.

Advantageously, each first communication network connector is arranged to receive inside :
- a first tip-end of one of the first cables from the back portion, and
- a second tip-end of one of second cables from the front portion.

Advantageously, each second communication network connector is arranged to receive inside :
- the second tip-end of one of the second cables.

This allows to provide inside connectors to provide the electrical connection, the inside connectors (namely the tip-end of first cables and second cables) being surrounded by outside connectors (namely the first communication network connectors and the second communication network connectors) to provide a stronger mechanical connection. That is, this allows to keep the reliability of the electrical connection.

In a second aspect, the disclosure also concerns a system having the single pass-through connector according to the first aspect, the plurality of first cables to be connected to the first communication network connectors, and the plurality of second cables to be connected to the second communication network connectors.

This allows to reduce the time it takes to connect and disconnect cables, to better arrange the cables so as to be more compact and allow an increased number of cables to be connected, thereby allowing for more data to be transferred by the cables. That is, this allows for space saving, but also for hybridization and multi-standard on the same single pass-through (rack), to come up with possible spare connections while providing a stronger mechanical behavior of the system. Further, this allows to facilitate the cabling works, and the connection/disconnection works, in particular in the automotive industry using prototypes and wherein the number of cables is to be adapted on site. Thereby the number of cables to be connected can be increased together with the number of applications such as radar, camera, various monitoring and the like.

In a third aspect, the disclosure also concerns a vehicle comprising a single pass-through connector according to first aspect.

This allows to reduce the time it takes to connect and disconnect cables, to better arrange the cables so as to be more compact and allow an increased number of cables to be connected, thereby allowing for more data to be transferred by the cables. That is, this allows for space saving, but also for hybridization and multi-standard on the same single pass-through (rack), to come up with possible spare connections while providing a stronger mechanical behavior of the set. Further, this allows to facilitate the cabling works, and the connection/disconnection works, in particular in the automotive industry using prototype vehicle and wherein the number of cables is to be adapted on site. Thereby the number of cables to be connected can be increased together with the number of applications such as radar, camera, various monitoring and the like.

Advantageously, the vehicle further comprises a panel arranged to separate a first area and a second area in the vehicle and on which is fixed the single pass-through connector, a plurality of first cables connected to the first communication network connectors and a plurality of second cables connected to the first and second communication network connectors. The areas can be sealed. The single passthrough connector can be used as an inline connector, in particular between sealed areas.

In a fourth aspect, the disclosure also concerns a method for assembling a system, the system comprising the single pass-through connector according to the first aspect, the first cables and the second cables,
the method having the steps consisting of:
- providing the single pass-through connector,
- inserting a tip-end of one of the first cables in the back portion of one of the first communication network connectors,
- inserting a tip-end of one of the second cables, in the front portion of the corresponding one first communication network connectors, so as to connect together the tip-end of said first cables and the tip-end f said second cables.

This allows to reduce the time it takes to connect and disconnect cables, to better arrange the cables so as to be more compact and allow an increased number of cables to be connected, thereby allowing for more data to be transferred by the cables. That is, this allows for space saving, but also for hybridization and multi-standard on the same single pass-through (rack), to come up with possible spare connections while providing a stronger mechanical behavior of the set. Further, this allows to facilitate the cabling works, and the connection/disconnection works, in particular in the automotive industry using prototype and wherein the number of cables is to be adapted on site. Thereby the number of cables to be connected can be increased together with the number of applications such as radar, camera, various monitoring and the like.

Advantageously, the tip-end is either a male connection or a female connection.

Advantageously, the second cables have second communication network connectors,
wherein the method further has the step consisting of:
- inserting one of the second communication network connector in the corresponding one first communication network connector, so as to connect them each other.

Advantageously, each of the first communication network connectors is arranged so that the connection of the tip-end of said first cables with the tip-end of said second cables is done (or performed) before the connection of the second communication network connector with the corresponding first communication network connector.

This allows to provide a better electrical connection of the first cable with the corresponding second cable. That is, this improve the mechanical strength of the connection between the first cable and the second cable at the level of the first communication network connector and the second communication network connector, and reduce the risk of disconnections of the inside connectors having the electrical path, due to e.g. vibration and the like.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a single pass-through connector according to one embodiment,
Figure 2 shows the single pass-through connector with a first cable and a second cable, in an exploded view,
Figure 3 shows the single pass-through connector in a partially stripped-down view with a set of first cables and second cables.

### DETAILED DESCRIPTION

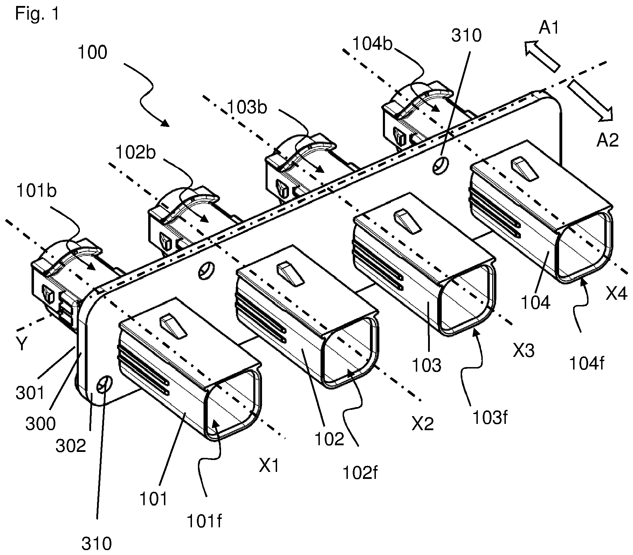

Figure 1 shows a single pass-through connector according to one embodiment.

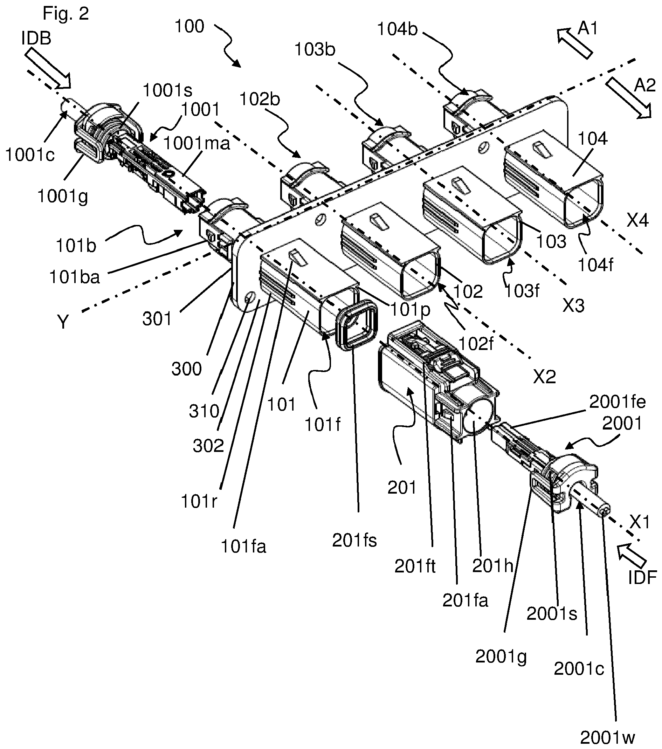

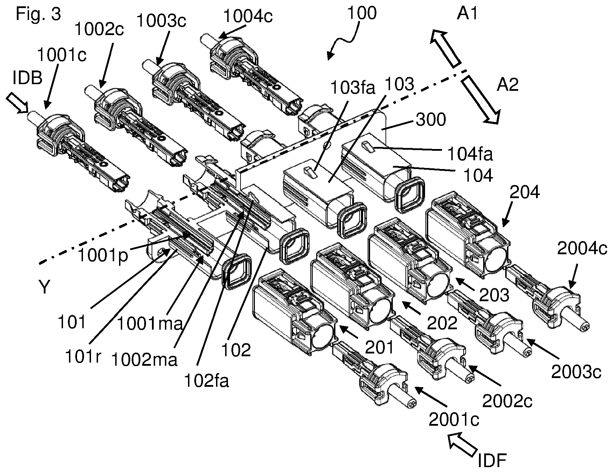

The single pass-through connector 100 is intended for connecting first cables 1001c, 1002c, 1003c, 1004c and second cables 2001c, 2002c, 2003c, 2004c disposed in respective first area A1 and second area A2 of a vehicle. The cables are represented with in Figure 2 and Figure 3.

The single pass-through connector 100 has a frame body 300 arranged to be fixed on a separation between said areas A1, A2. The separation could be a panel of the vehicle, a wall inside the vehicle or the like.

The frame body 300 has a first side 301 and a second side 302. The frame body 300 may serve as a delimitation between the first area A1 and the second area A2, or may be installed on a delimitation between the first area A1 and the second area A2. Said delimitation could be the panel as explained above.

The first side 301 is arranged to be on the side of the first area A1 and the second side 302 is arranged to be on the side of the second area A2. Preferably, the first side 301 is opposed to the second side 302.

The frame body 300 has holes 310 in order to fix the frame body 300 on the panel or wall of the vehicle, with screws or any suitable fixation system.

The single pass-through connector 100 further has a plurality of first communication network connectors 101, 102, 103, 104.

Each first communication network connectors 101, 102, 103, 104 has a back portion 101b, 102b, 103b, 104b on the first side 301 of the frame body 300 and a front portion 101f, 102f, 103f, 104f on the second side 302 of the frame body 300.

Each first communication network connector 101, 102, 103, 104 is arranged for receiving the corresponding first cable 1001c, 1002c, 1003c, 1004c from the back portion 101b, 102b, 103b, 104b, and for receiving the corresponding second cable 2001c, 2002c, 2003c, 2004c from the front portion 101f, 102f, 103f, 104f, so as to connect the corresponding first cable 1001c, 1002c, 1003c, 1004c and the corresponding second cable 2001c, 2002c, 2003c, 2004c together and pass-through the separation between the two areas A1, A2, as in will also be explained with further details with respect to Figure 2 and Figure 3. That is, each first communication network connector 101, 102, 103, 104 is arranged for receiving at least a portion of the corresponding first cable 1001c, 1002c, 1003c, 1004c and at least a portion of the corresponding second cable 2001c, 2002c, 2003c, 2004c.

The frame body 300 has a longitudinal axis Y. Each of the first communication network connector 101, 102, 103, 104 has a main axis X1, X2, X3, X4 respectively, preferably perpendicular to the longitudinal axis Y of the frame body 300.

Figure 2 shows the single pass-through connector 100 with the first cable 1001c and the second cable 2001c, in an exploded view.

For sake of visibility of the drawings, only one of the first cables 1001c, 1002c, 1003c, 1004c is represented in Figure 2, namely 1001c. It is to be understood that the explanations and features related to the first cable 1001c also applies to the other first cables 1002c, 1003c, 1004c represented in Figure 3, unless otherwise specified.

Similarly, for sake of visibility of the drawings, only one of the second cables 2001c, 2002c, 2003c, 2004c is represented in Figure 2, namely 2001c. It is to be understood that the explanation and features related to the second cable 2001c also applies to the other first cables 2002c, 2003c, 2004c represented in Figure 3, unless otherwise specified.

The first cable 1001c has a tip-end, a grip portion 1001g and a seal portion 1001s. The tip-end of the first cable 1001c is a male connection 1001ma in the representation of Figure 2. The male connection 1001ma is preferably an AMEC connector.

The back portion 101b of the first communication network connector 101 has an anchoring portion 101ba also called back lock portion 101ba, which is arranged to cooperate with the grip portion 1001g of the first cable 1001c, so as to fix the first cable 100c on the back portion 101b.

The first communication network connector 101 has the back portion 101b, arranged on the first side 301 of the frame body 300 as explained above. The first cable 1001c may be inserted in the back portion 101b from the back. That is to say, the first cable 1001c may be inserted in the back portion 101b along the main axis X1, in the back insertion direction IDB. Thereby, a portion of the first cable 1001c may be inserted in the first communication network connector 101. The portion of the first cable 1001c to be introduced in the first communication network connector 101 from the back is the tip-end of the first cable 1001c in the representation of Figure 2.

The second cable 2001c has a tip-end, a grip portion 2001g and a seal portion 2001s. The tip-end of the second cable 2001c is a female connection 2001fe in the representation of Figure 2. The female connection 2001fe is preferably an AMEC connector.

The first communication network connector 101 has the front portion 101f, arranged on the second side 302 of the frame body 300, as explained above. The second cable 2001c may be inserted in the front portion 101f from the front. That is to say, the second cable 2001c may be inserted in the front portion 101f along the main axis X1, in the front insertion direction IDF. Thereby, a portion of the second cable 2001c may be inserted in the first communication network connector 101. The portion of the second cable 2001c to be introduced in the first communication network connector 101 from the front is the tip-end of the second cable 2001c in the representation of Figure 2.

It is to be noted that the female connection 2001fe may also be inserted in a second communication network connector 201 of the second cable 2001c. That is, the female connection 2001fe may be inserted, before, in the second communication network connector 201 and, then, in the first communication network connector 101.

The second cable 2001c further has the grip portion 2001g and the seal portion 2001s. The grip portion 2001g is arranged to cooperate with an anchoring portion 201fa of the second communication network connector 201, in order to fix the grip portion 2001g to the anchoring portion 201fa.

In other words, the second cable 2001c has an inside connector 2001 (comprising the female connection 2001fe) which could be introduced in the second communication network connector 201 acting as an outside connector. The outside connector is arranged to surround the inside connector 2001 when they are attached together via the grip portion 2001g and the anchoring portion 201fa. Then, the female connection 2001fe can be inserted in the first network communication connector 101 so as to be connected with the male connection 1001ma, while the first communication network connector 101 and the second communication network connector 201 can be connected together. Similarly, the first cable 1001c has an inside connector 1001 (comprising the male connection 1001ma) which could be introduced in the first communication network connector 101 acting as an outside connector. That is, when all is connected, the outside connector of the first cable 1001c is connected with the outside connector of the second cable 2001c, and the inside connector of the first cable 1001c is connected with the inside connector of the second cable 2001c.

In addition, the second communication network connector 201 may further has a hole 201h to receive the female connection 2001fe. The second communication network connector 201 may further has a front tilting attach 201ft in order to cooperate with a front anchoring portion 101fa of the first communication network connector 101, so as to attach the first communication network connector 101 and the second communication network connector 201.

In addition, the second communication network connector 201 may further have a seal 201fs in order to seal the connection between the second communication network connector 201 and the first communication network connector 101.

In addition, the first communication network connector 101 may further has lateral ridges 101r in order to cooperate with lateral grooves of the second communication network connector 201, so as to better guide the introduction of the second communication network connector 201 in the first communication network connector 101. This also allows for a better fixation of the second communication network connector 201 in the first communication network connector 101, when connected.

Still further, in a preferred embodiment, the first communication network connector 101 may have lateral projections 101p arranged to cooperate with guiding grooves of the second communication network connector 201, so as to better guide the introduction of the second communication network connector 201 in the first communication network connector 101. This also allows for a better fixation of the second communication network connector 201 in the first communication network connector 101, when connected.

The second cable 2001 may have wires 2001w, preferably two wires 2001w, so as to allow transfer of electrical signal and data. The two wires 2001w could be twisted or in parallel. The same applies for the first cables 1001c, and generally speaking to all cables 1001c, 1002c, 1003c, 1004c, 2001c, 2002c, 2003c, 2004c.

In a preferred embodiment, a connector pitch distance between each of the first communication network connectors 101, 102, 103, 104 is less than 30 mm, preferably less than 27 mm, more preferably less than 25 mm. That is, the connector pitch distance may be measured between the main axis X1, X2, X3, X4.

Figure 3 shows the single pass-through connector in a partially stripped-down view (or peeled view).

Each of the second cables 2001c, 2002c, 2003c, 2004c has one respective second communication network connector 201, 202, 203, 204 at its end.

The male connection 1001ma may have pins 1001p in a conductive material in order to cooperate with conductive portion of the female connection 2001fe, thereby allowing a transfer of electrical signal and data. The same applies for the male connection 1002ma of the first cable 1002c, and for the other first cables 1003c and 1004c and second cables 2002c, 2003c, 2004c.

In a preferred embodiment, the first communication network connectors 101, 102, 103, 104 are identical. However, the single pass-through connector 100 may have at least two identical first communication network connectors 101, 102, 103, 104, such as two or three.

In a preferred embodiment, the first communication network connectors 101, 102, 103, 104 are automatable module ethernet connectors.

In a preferred embodiment, the first communication network connectors 101, 102, 103, 104 are AMEC connector.

### AMEC means Automotive Modular Ethernet Connection.

In a preferred embodiment, the first communication network connectors 101, 102, 103, 104, the second communication network connectors 201, 202, 203, 204, the first cables 1001c, 1002c, 1003c, 1004c and the second cables 2001c, 2002c, 2003c, 2004c, and their respective tip-ends, are arranged for delivering Ethernet connection for 100 Mbps or more, preferably 1 Gbps or more.

In a preferred embodiment, the first communication network connectors 101, 102, 103, 104 are male insert to be surrounded by second communication network connectors 201, 202, 203, 204 which are female insert.

It will be understood that various modifications and/or improvements obvious to the person skilled in the art may be made to the various embodiments of the disclosure described in the present description without departing from the scope of the disclosure defined by the appended claims.

For example, it is possible to invert the gender of the male connection 1001ma and the female connection 2001fe, that it to say that the first cables 1001c, 1002c, 1003c, 1004c, have a female connection and that the second cables 2001c, 2002c, 2003c, 2004c have a male connection.

It is also possible that the first cables 1001c, 1002, 1003, 1004c have a mix of male connection or female connection, or neutral gender connection and any other suitable electrical connection.

It is possible to forecast different type of network connectors as first communication network connector 101, 102, 103, 104 and second communication network connector 201, 202, 203, 204, that is to say other type than automatable module ethernet connectors.

It is possible to provide other guiding means in order to improve the introduction of the second communication network connector 201, 202, 203, 204 in the first communication network connector 101, 102, 103, 104.

It is possible to provide other guiding means in order to improve the connection of the female connection 2001fe and the male connection 1001ma, such as internal guiding portion inside the first communication network connector 101, 102, 103, 104 and/or inside the second communication network connector 201, 202, 203, 204.

It is possible to provide other fixations means in order to improve the reliable connection of the female connection 2001fe and the male connection 1001ma, such as internal abutting portion inside the first communication network connector 101, 102, 103, 104 and/or inside the second communication network connector 201, 202, 203, 204.

## Claims

1. A single pass-through connector (100) for connecting first cables (1001c, 1002c, 1003c, 1004c) and second cables (2001c, 2002c, 2003c, 2004c) disposed in respective first area (A1) and second area (A2) of a vehicle,
the single pass-through connector (100) having a frame body (300) arranged to be fixed on a separation between said areas (A1, A2),
the single pass-through connector (100) further having a plurality of first communication network connectors (101, 102, 103, 104) for receiving portions of the first cables (1001c, 1002c, 1003c, 1004c) and of the second cables (2001c, 2002c, 2003c, 2004c),
wherein the plurality of first communication network connectors (101, 102, 103, 104) is fixed on the frame body (300), and
each first communication network connector (101, 102, 103, 104) has a back portion (101b, 102b, 103b, 104b) on a first side (301) of the frame body (300) and a front portion (101f, 102f, 103f, 104f) on a second side (302) of the frame body (300), and
wherein each first communication network connector (101, 102, 103, 104) is arranged for receiving the corresponding first cable (1001c, 1002c, 1003c, 1004c) from the back portion (101b, 102b, 103b, 104b), and for receiving the corresponding second cable (2001c, 2002c, 2003c, 2004c) from the front portion (101f, 102f, 103f, 104f), so as to connect the corresponding first cable (1001c, 1002c, 1003c, 1004c) and the corresponding second cable (2001c, 2002c, 2003c, 2004c) together and pass-through the separation between the two areas (A1, A2).

2. The single pass-through connector (100) according to claim 1, wherein the second side is opposite to the first side.

3. The single pass-through connector (100) according to claims 1 or 2, wherein at least two of the first communication network connectors (101, 102, 103, 104) are identical.

4. The single pass-through connector (100) according to claims 1 to 3, wherein at least one of the first communication network connectors (101, 102, 103, 104) is arranged to receive inside an automatable module ethernet connector.

5. The single pass-through connector (100) according to claims 1 to 4, wherein at least one of the first communication network connectors (101, 102, 103, 104) is a male insert.

6. The single pass-through connector (100) according to claims 1 to 5, presenting a connector pitch distance between each of the first communication network connectors (101, 102, 103, 104) which is less than 30 mm, preferably less than 27 mm, more preferably less than 25 mm.

7. The single pass-through connector (100) according to claims 1 to 6, wherein the frame body (300) comprises holes (310) arranged to receive fixation systems.

8. The single pass-through connector (100) according to claims 1 to 7, wherein each back portion (101b, 102b, 103b, 104b) has a back lock portion (101ba) arranged to hold in position the corresponding first cable (1001c, 1002c, 1003c, 1004c).

9. The single pass-through connector (100) according to claims 1 to 8, wherein each first communication network connector (101, 102, 103, 104) is arranged to fit a corresponding second communication network connectors (201, 202, 203, 204) of the second cables (2001c, 2002c, 2003c, 2004c).

10. The single pass-through connector (100) according to claims 1 to 9, wherein each first communication network connector (101, 102, 103, 104) is arranged to receive inside :
- a tip-end of one of the first cables (1001c, 1002c, 1003c, 1004c) from the back portion (101b, 102b, 103b, 104b), and
- a tip-end of one of the second cables (2001c, 2002c, 2003c, 2004c) from the front portion (101f, 102f, 103f, 104f).

11. A vehicle comprising a single pass-through connector (100) according to claims 1 to 10.

12. The vehicle according to claim 11, further comprising a panel arranged to separate a first area and a second area in the vehicle and on which is fixed the single pass-through connector (100), a plurality of first cables (1001c, 1002c, 1003c, 1004c) connected to the first communication network connectors (101, 102, 103, 104) and a plurality of second cables (2001c, 2002c, 2003c, 2004c) connected to the second communication network connectors (201, 202, 203, 204).

13. A method for assembling a system, the system comprising the single pass-through connector (100) according to any one of claims 1 to 10, the first cables (1001c, 1002c, 1003c, 1004c) and the second cables (2001c, 2002c, 2003c, 2004c),
the method having the steps consisting of:
- providing the single pass-through connector (100),
- inserting a tip-end (1001a, 2001fe) of one of the first cables (1001c, 1002c, 1003c, 1004c) in the back portion (101b, 102b, 103b, 104b) of one of the first communication network connectors (101, 102, 103, 104),
- inserting a tip-end (1001a, 2001fe) of one of the second cables (2001c, 2002c, 2003c, 2004c) in the front portion (101f, 102f, 103f, 104f) of the corresponding one first communication network connector (101, 102, 103, 104), so as to connect together the tip-end (1001a, 2001fe) of said first cables (1001c, 1002c, 1003c, 1004c) and the tip-end (1001a, 2001fe) of said second cables (2001c, 2002c, 2003c, 2004c).

14. The method of claim 13, wherein the second cables (2001c, 2002c, 2003c, 2004c) have second communication network connectors (201, 202, 203, 204),
wherein the method further has the step consisting of:
- inserting one of the second communication network connector (201, 202, 203, 204) in the corresponding one first communication network connector (101, 102, 103, 104), so as to connect them each other.

15. The method of claim 14, wherein each of the first communication network connectors (101, 102, 103, 104) is arranged so that the connection of the tip-end (1001a, 2001fe) of said first cables (1001c, 1002c, 1003c, 1004c) and the tip-end (1001a, 2001fe) of said second cables (2001c, 2002c, 2003c, 2004c) is done before the connection of the second communication network connector (201, 202, 203, 204) with the corresponding first communication network connector (101, 102, 103, 104).
